# EUROPEAN PATENT SPECIFICATION

(11) **EP 3 410 681 B1**
(45) Date of publication and mention of the grant of the patent: **20.05.2020**
(21) Application number: 18166079.6
(22) Date of filing: 06.04.2018
(51) Int. Cl.: H04M 1/725, H04M 1/67

(54) **METHOD FOR CONTROLLING LOCK-SCREEN INTERFACE AND RELATED PRODUCTS**
VERFAHREN ZUR STEUERUNG EINER SPERRBILDSCHIRM-SCHNITTSTELLE UND VERWANDTE PRODUKTE
PROCÉDÉ DE COMMANDE D'INTERFACE À ÉCRAN DE VERROUILLAGE ET PRODUITS ASSOCIÉS

(30) Priority: 31.05.2017 CN 201710400495
(43) Date of publication of application: 05.12.2018
(73) Proprietor: GUANGDONG OPPO MOBILE TELECOMMUNICATIONS CORP., LTD., Wusha, Chang'an Dongguan, Guangdong 523860 (CN)
(72) Inventor: BAI, Jian, Chang'an Dongguan, Guangdong (CN)
(74) Representative: Mewburn Ellis LLP

(56) References cited:
- EP-A1- 3 119 064
- WO-A1-2016/176834
- US-A1- 2013 069 962

## Description

### TECHNICAL FIELD

The present disclosure relates to the field of computers, and particularly to a method for controlling a lock-screen interface and related products.

### BACKGROUND

A lock-screen can be generally divided into two types, one is a computer lock-screen, and the other one is a phone lock-screen. The lock-screen is to protect data security of a system. In addition to protecting the data security of the system, the phone lock-screen can also prevent accidental touch or press.

Regarding the phone lock-screen, with the popularity of smart phones, more and more users use lock-screen software to protect phone privacy of their own. Similar to the computer lock-screen, there are two types of phone lock-screen, one is to turn off the power of a screen, and the other one is to lock the screen quickly and intelligently with software.

"Interface" refers to a graphical state that is displayed on the screen and presented to the user. The interface is different from a window, a dialog box, or a message box.

"Lock-screen interface" is an interface in a lock-screen state. Currently, the lock-screen interface is generally implemented by establishing a library of the lock-screen interface and presenting an image in the library randomly in the lock-screen state. This manner is not intelligent enough and cannot provide a lock-screen interface the users need.

WO2016/176834A1 addresses systems and methods to facilitate a lock screen graphical user interface (GUI), in which the lock screen GUI enables quick and convenient access to applications relevant to the user's current activity, without troubling the user to unlock the device and access these applications via any home screens.

US 2013/069962A1 relates to a technology in which a mobile device such as a phone automatically changes lock wallpaper content that appears when the device is in its lock state. An API or the like allows information to be received from an application or service according to which the content is changed, including obtaining the content as needed. The lock wallpaper content may change in response to an automatic change event, and may correspond to a current device context.

### SUMMARY

Embodiments of the present disclosure provide a method for controlling a lock-screen interface and related products, so as to recommend a lock-screen interface intelligently.

According to a first aspect of the invention, there is provided a method for controlling a lock-screen interface as set out in claim 1. Preferred embodiments are defined in the dependent claims.

Current activity attribute information of a user of a terminal equipment is predicted and static attribute information of the user is predicted and stored. A lock-screen image that matches the activity attribute information and the pre-stored static attribute information is determined based on the current activity attribute information and the static attribute information.

According to another aspect of the invention, there is provided a terminal equipment that includes one or more processors, a memory, a communication interface, and one or more programs.

The one or more programs are stored in the memory and include instructions, which when executed, become operable with the one or more processors to execute procedures corresponding to the method discussed above.

Accoring to another aspect of the invention, there is provided a non-transitory computer readable storage medium storing computer programs configured for electronic data interchange. When executed, the computer programs become operable with a computer to execute the method discussed above. The computer may include a terminal equipment.

### BRIEF DESCRIPTION OF THE DRAWINGS

The drawings referred to in the embodiments will be briefly described.
FIG. 1 is a schematic flow chart diagram illustrating a method for controlling a lock-screen interface of an embodiment of the present disclosure.
FIG. 2 is diagram of a lock-screen interface of an embodiment of the present disclosure.
FIG. 3 is a structure diagram of an apparatus for controlling a lock-screen interface of an embodiment of the present disclosure.
FIG. 4 is a structure diagram of a terminal equipment of an embodiment of the present disclosure.
FIG. 5 is a structure diagram of a terminal equipment of an embodiment of the present disclosure.
FIG. 6 is a structure diagram of a terminal equipment of an embodiment of the present disclosure.

### DETAILED DESCRIPTION OF ILLUSTRATED EMBODIMENTS

Technical solutions of the present disclosure will be described clearly and completely with reference to the accompanying drawings; obviously, the embodiments described below are merely part of rather than all of the embodiments of the present disclosure. Based on the embodiments of the present disclosure, other embodiments obtained there from without any creative work by those of ordinary skill in the art shall fall into the protection scope of the present disclosure.

The terms "first", "second" and the like in the specification and claims of the present disclosure and the drawings are used for distinguishing different objects rather than describing a specific order. In addition, terms of "including" and "having" and any inflexions thereof are intended to cover a non-exclusive inclusions relationship. For example, processes, methods, systems, products or devices containing a series of operations or units are not limitative to listed processes or units, other processes or units which are not listed can also be included, or other processes or units inherent to these processes, methods, products or devices can also be included.

The term "embodiment" or "implementation" referred to herein means that a particular feature, structure, or feature described in conjunction with the embodiment may be contained in at least one embodiment of the present disclosure. The phrase appearing in various places in the specification does not necessarily refer to the same embodiment, nor does it refer to an independent or alternative embodiment that is mutually exclusive with other embodiments. It is expressly and implicitly understood by those skilled in the art that an embodiment described herein may be combined with other embodiments.

A terminal equipment involved in the embodiments of the present disclosure may include various handheld devices having wireless communication functions, in-vehicle devices, wearable devices, computing devices or other processing devices connected to the wireless modem, as well as various forms of user equipments (UE), mobile stations (MS), and the like.

According to a first aspect of embodiments of the present disclosure, there is provided a method for controlling a lock-screen interface. The method can include the follows.

Current activity attribute information of a user of a terminal equipment is acquired. A lock-screen image that matches the activity attribute information and pre-stored static attribute information is determined based on the current activity attribute information and the static attribute information.

In one implementation, the current activity attribute information of the user of the terminal equipment can be acquired as follows: the current activity attribute information of the user of the terminal equipment is predicted according to at least one of a current geographic location, a motion state, a current moment, and a running application set of the terminal equipment.

In one implementation, the current activity attribute information of the user of the terminal equipment can include at least one of: work, travel, shopping, and rest.

In one implementation, the method can further include the follows. The static attribute information of the user of the terminal equipment is acquired. The static attribute information of the user of the terminal equipment is stored.

In one implementation, the static attribute information of the user of the terminal equipment can be acquired as follows: the static attribute information of the user of the terminal equipment is predicted based on historical usage information of an application of the terminal equipment.

In one implementation, the static attribute information can include at least one of: interests, hobbies, and an occupation.

In one implementation, the method can further include the follows before the lock-screen image that matches the activity attribute information and the pre-stored static attribute information is determined.

A library containing the lock-screen image is established according to the static attribute information of the user of the terminal equipment.

The library is sorted according to categories that activity attribute information is involved in.

In one implementation, the lock-screen image that matches the current activity attribute information and the pre-stored static attribute information can be determined as follows.

The library is searched according to a category that the current activity attribute information is involved in.

An image associated with both the static attribute information and the current activity attribute information is determined as the lock-screen image.

According to a second aspect of embodiments of the present disclosure, there is provided an apparatus for controlling a lock-screen interface. The apparatus for controlling a lock-screen interface can include an activity acquiring unit and an image determining unit.

The activity acquiring unit is configured to acquire current activity attribute information of a user of a terminal equipment.

The image determining unit is configured to determine a lock-screen image that matches the current activity attribute information and pre-stored static attribute information, based on the current activity attribute information and the static attribute information.

In one implementation, the activity acquiring unit is further configured to predict the current activity attribute information of the user of the terminal equipment according to at least one of a current geographic location, a motion state, a current moment, and a running application set of the terminal equipment.

In one implementation, the current activity attribute information of the user of the terminal equipment can include at least one of: work, travel, shopping, and rest.

In one implementation, the apparatus can further include a static acquiring unit and a storing unit.

The static acquiring unit is configured to acquire the static attribute information of the user of the terminal equipment.

The storing unit is configured to store the static attribute information of the user of the terminal equipment.

In one implementation, the static acquiring unit is further configured to predict the static attribute information of the user of the terminal equipment based on historical usage information of an application of the terminal equipment.

In one implementation, the static attribute information can include at least one of: interests, hobbies, and an occupation.

In one implementation, the apparatus can further include a library establishing unit and a sorting unit.

The library establishing unit is configured to establish a library containing the lock-screen image according to the static attribute information of the user of the terminal equipment.

The sorting unit is configured to sort the library according to categories that activity attribute information is involved in.

In one implementation, the image determining unit is further configured to: search the library according to a category that the current activity attribute information is involved in; determine an image associated with both the static attribute information and the current activity attribute information as the lock-screen image.

According to a third aspect of embodiments of the present disclosure, there is provided a terminal equipment. The terminal equipment includes a processing unit and a communicate unit.

The processing unit is configured to acquire current activity attribute information of a user of a terminal equipment; acquire static attribute information of the user of the terminal equipment; determine a lock-screen image that matches the static attribute information and the activity attribute information, based on the static attribute information and the activity attribute information.

In one implementation, the processing unit is further configured to establish a library containing the lock-screen image according to the static attribute information of the user of the terminal equipment before determining the lock-screen image that matches the static attribute information and the activity attribute information.

According to a fourth aspect of embodiments of the present disclosure, there is provided a terminal equipment. The terminal equipment includes one or more processors, a memory, a communication interface, and one or more programs.

The one or more programs are stored in the memory and include instructions, which when executed, become operable with the one or more processors to execute procedures of any method of the embodiments of the present disclosure.

According to a fifth aspect of embodiments of the present disclosure, there is provided a non-transitory computer readable storage medium storing computer programs configured for electronic data interchange. When executed, the computer programs become operable with a computer to execute any method of the embodiments of the present disclosure. The computer includes a terminal equipment.

According to a sixth aspect of embodiments of the present disclosure, there is provided a computer program product. The computer program product includes a non-transitory computer readable storage medium storing computer programs. The computer programs are operable with a computer to perform all or part of the operations of any of the methods described in the above method embodiments. The computer program product may be a software installation package. The computer can be a terminal equipment or other equipment.

As can be seen, by means of the embodiments of the present disclosure, the lock-screen image that matches the static attribute information and the activity attribute information can be determined based on the static attribute information and the activity attribute information. On one hand, the lock-screen image matches the static attribute information, and it is possible to ensure that the lock-screen image preferred by the user of the terminal equipment is recommended; on the other hand, the lock-screen image matches the activity attribute information, and it is possible to ensure that the lock-screen image of a current activity scene of the user of the terminal equipment is recommended. Therefore, a more targeted and more intelligent lock-screen picture recommendation can be achieved.

Embodiments of the present disclosure will be described with reference to the accompanying drawings in the following.

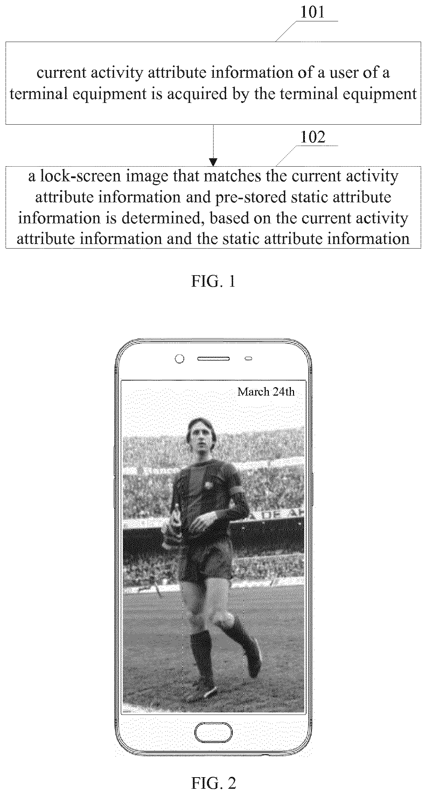

Referring to FIG. 1, FIG. 1 is a schematic flow chart diagram illustrating a method for controlling a lock-screen interface, applicable to a terminal equipment. As illustrated in FIG. 1, the method for controlling a lock-screen interface can begin at block 101.

At block 101, current activity attribute information of a user of a terminal equipment is acquired by the terminal equipment.

In this embodiment of the present disclosure, the activity attribute information refers to attribute information of user's activity. The user can refer to human. The human's activity can include work, travel, shopping and the like. These human's activities can be predicted according to changes in some parameters, for example, a mobile phone application the user currently opens, the current moment, how long the user has not operated the terminal equipment, and various parameter changes. How to determine the attribute information of the user according to changes in parameter information that can be obtained by the terminal equipment is not limited in the embodiment of the present disclosure.

At block 102, a lock-screen image that matches the current activity attribute information and pre-stored static attribute information is determined, based on the current activity attribute information and the static attribute information.

The static attribute information is a kind of information relative to the activity attribute information. This kind of information is relatively invariant or less variable. The static attribute information refers to some user attribute, such as interests, occupations, and hobbies of the user and the like. The static attribute information can be predicted by historical usage information of the user of the terminal equipment. For example, based on articles that the user of the terminal equipment shares via social software, the occupation of the user of the terminal equipment can be predicted. More specifically, for example, in case that the user of the terminal equipment usually shares various kinds of cases, it can be determined that the occupation of the user belongs to a legal profession. More specifically, in case that the shared cases are focused on patents, it can be determined that the occupation of the user is a patent-related occupation, such as an enterprise intellectual property position, a patent agent and the like.

In one implementation, the static attribute information of the user of the terminal equipment can be acquired and stored before the lock-screen image that matches the current activity attribute information and the pre-stored static attribute information is determined.

In this procedure, take both the static attribute information and the current activity attribute information into consideration simultaneously, as a result, the lock-screen image determined finally will meet needs of both static attribute and activity attribute. For example, the lock-screen image not only matches an interest point of the user, but also matches a current activity scene. A more detailed example is given below. Assuming that the user is interested in football and a current activity is tourism, a lock-screen interface related to football culture of a current tourist location can be selected.

It can be understood that, after the lock-screen image is determined, the lock-screen image can be displayed on the display screen. Displaying of the lock-screen image on the display screen can be triggered by lighting of the display screen by the user, a call or a message, or other conditions that can light the screen. When to display the lock-screen image is not a concern of the embodiments of the present disclosure and will not be particularly limited.

The lock-screen image can be determined based on the static attribute information and the activity attribute information. On one hand, the lock-screen image matches the static attribute information, and it is possible ensure that the lock-screen image preferred by the user of the terminal equipment is recommended; on the other hand, the lock-screen image matches activity attribute information, and it is possible ensure that the lock-screen image of the current activity scene of the user of the terminal equipment is recommended. Therefore, a more targeted and more intelligent lock-screen picture recommendation can be achieved.

In one implementation, a solution to establish a library of the lock-screen image is also provided as follows. The above-mentioned method can further include the follows before the lock-screen image that matches the static attribute information and the current activity attribute information is determined. A library containing the lock-screen image is established according to the static attribute information of the user of the terminal equipment. The library can be further sorted according to categories that activity attribute information is involved in.

For example, the categories that activity attribute information may be involved in can include but not limit to work, travel, shopping, and rest.

In the embodiments of the present disclosure, the static attribute information is associated with static attribute of the user of the user equipment, therefore images that matches the static attribute information is relatively fixed, so that a corresponding library can be pre-established in the embodiments of the present disclosure. For example, in a scenario of wireless local area network (WLAN), images that the library needs can be downloaded and then pre-stored in the terminal equipment. In addition, the library can be sorted according to categories that activity attribute information may be involved in. Therefore, on one hand, speed of determining the lock-screen image subsequently can be accelerated; on the other hand, data flow required for downloading the image temporarily can be saved.

In one implementation, examples of the static attribute information and manners to acquire the static attribute information are given below. The process of acquiring the static attribute information of the user of the terminal equipment includes the follows. The static attribute information is predicted based on historical usage information of an application of the terminal equipment. The static attribute information can include but not limit to at least one of interests, hobbies, and an occupation of the user of the terminal equipment.

In the embodiments of the present disclosure, the static attribute information of the user of the terminal equipment is predicted based on historical information of the application. It can be understood that the static attribute information is not limited to the interests, the hobbies, and the occupation, it can also include other static attribute information of the user of the terminal equipment. Therefore, the above examples should not be understood as any limitation of the embodiments of the present disclosure.

In one implementation, the activity attribute information can be acquired as follows. The process of acquiring the current activity attribute information of the user of the terminal equipment includes the follows: the current activity attribute information of the user of the terminal equipment is predicted according to at least one of a current geographic location, a motion state, a current moment, and a running application set of the terminal equipment.

In the embodiments of the present disclosure, the current geographic location, the motion state, the current moment, the running application set, and other understandable information are used to predict the activity attribute information. However, the present disclosure is not limited thereto. Any information that can be used to predict the current activity of the user can be used. The above examples should not be understood as any limitation of the embodiments of the present disclosure.

In one implementation, examples of the activity attribute information are given below. The current activity attribute information of the user of the terminal equipment includes at least one of: work, travel, shopping, and rest.

Based on foregoing explanations, the activity attribute information can be various. The above examples should not be understood as any limitation of the embodiments of the present disclosure.

In one implementation, a manner in which the lock-screen image is determined is given below. The process of determining the lock-screen image that matches the static attribute information and the activity attribute information includes the follows. The library is searched according to a category that the current activity attribute information is involved in. An image associated with both the static attribute information and the activity attribute information is determined as the lock-screen image from the category that the current activity attribute information is involved in.

For example, in case that the category that the current activity attribute information is involved in is travel, the lock-screen image can be determined by searching the library according to the category of travel.

In the embodiments, the term "associated with" means that there is an association relationship. The association relationship relates to some logical connection. For example, some content satisfies the user's interest, some content relates to the occupation, or some content relates to the current activity of the user and the like. The association relationship can be defined in advance.

As an example, assuming that the user of the terminal equipment is a football fan, he/she is in tourism and the tourist city is Barcelona, and that day was Match, 24 when Cruyff died, based on this, a picture of Cruyff can be displayed as the lock-screen interface, as illustrated in FIG. 2.

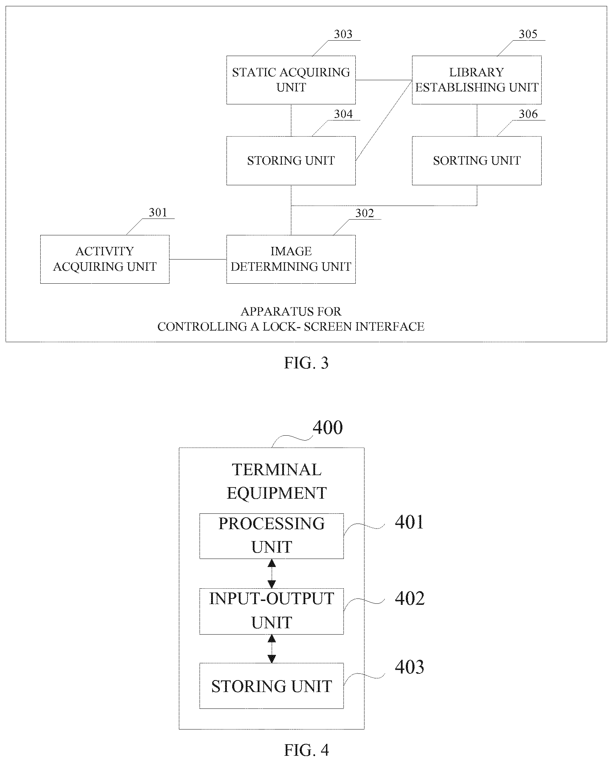

Referring to FIG. 3, an apparatus for controlling a lock-screen interface is provided. The apparatus is applicable to a terminal equipment. The apparatus includes an activity acquiring unit 301 and an image determining unit 302.

The acquiring unit 301 can be a global position system (GPS) sensor, a motion sensor, a processor, a circuit, or control components coupled to or integrated in the processor.The image determining unit 302 can be a processor, a circuit, control components coupled to or integrated in the processor. The acquiring unit 301 and the image determining unit 302 can be disposed integrally or separately.

The activity acquiring unit 301 is configured to acquire current activity attribute information of a user of a terminal equipment.

The image determining unit 302 is configured to determine a lock-screen image that matches the activity attribute information and pre-stored static attribute information, based on the static attribute information and the current activity attribute information.

In one implementation, the terminal equipment can further include a static acquiring unit 303 and a storing unit 304.

The static acquiring 303 unit is configured to acquire the static attribute information of the user of the terminal equipment.

The storing unit 304 is configured to pre-store the static attribute information of the user of the terminal equipment.

In one implementation, the static acquiring 303 can be a processor, a circuit, control components coupled to or integrated in the processor. The storing unit 304 can be a memory.

In this embodiment of the present disclosure, the activity attribute information refers to attribute information of user's activity. The user can refer to human. The human's activity can include work, travel, shopping, and the like. These human's activities can be predicted according to changes in some parameters, for example, a mobile phone application the user currently opens, the current moment, how long the user has not operated the terminal equipment, and various parameter changes. How to determine the attribute information of the user according to changes in some parameter information that can be obtained by the terminal equipment is not limited in the embodiment of the present disclosure.

The static attribute information is a kind of information relative to the activity attribute information. This kind of information is relatively invariant or less variable. The static attribute information refers to some user attribute, such as interests, occupations, and hobbies of the user and the like. The information can be predicted by historical usage information of the user of the terminal equipment. For example, based on articles that the user of the terminal equipment shares via social software, the occupation of the user of the terminal equipment can be predicted. More specifically, for example, in case that the user of the terminal equipment usually shares various kinds of cases, it can be determined that the occupation of the user belongs to a legal profession. More specifically, in case that the shared cases are focused on patents, it can be determined that the occupation of the user is a patent-related occupation, such as an enterprise intellectual property position, a patent agent and the like.

In this embodiment, take both the static attribute information and the activity attribute information into consideration simultaneously, as a result, the lock-screen image determined finally will meet needs of both static attribute and activity attribute. For example, the lock-screen image not only matches an interest point of the user, but also matches a current activity scene. A more detailed example is given below, assuming that the user is interested in football and a current activity is tourism, a lock-screen interface related to football culture of a current tourist location can be selected.

It can be understood that, after the lock-screen image is determined, the lock-screen image can be displayed on the display screen. Displaying of the lock-screen image on the display screen, or other conditions that can light the screen. When to display the lock-screen image is not a concern of the embodiments of the present disclosure and will not be particularly limited.

The lock-screen image can be determined based on the static attribute information and the current activity attribute information. On one hand, the lock-screen image matches the static attribute information, and it is possible ensure that the lock-screen image preferred by the user of the terminal equipment is recommended; on the other hand, the lock-screen image matches activity attribute information, and it is possible ensure that the lock-screen image of the current activity scene of the user of the terminal equipment is recommended. Therefore, a more targeted and more intelligent lock-screen picture recommendation can be achieved.

In one implementation, a solution to establish a library of the lock-screen image is also provided as follows. The terminal equipment can further include a library establishing unit 305 and a sorting unit 306.

The library establishing unit 305 is configured to establish a library containing the lock-screen image according to the static attribute information of the user of the terminal equipment.

The sorting unit 306 is configured to sort the library according to categories that activity attribute information is involved in.

The library establishing unit 305 and the sorting unit 306 can be a processor, a circuit, control components coupled to or integrated in the processor. The library establishing unit 305 and the sorting unit 306 can be disposed integrally or separately.

In the embodiments of the present disclosure, the static attribute information is associated with static attribute of the user of the user equipment, therefore images that matches the static attribute information is relatively fixed, so that a corresponding library can be pre-established in the embodiments of the present disclosure. For example, in a scenario of WLAN, images that the library needs can be downloaded and then pre-stored in the terminal equipment. In addition, the library can be sorted according to categories that activity attribute information may be involved in. For example, the categories that activity attribute information may be involved in can include but not limit to work, travel, shopping, and rest. Therefore, on one hand, speed of determining the lock-screen image subsequently can be accelerated; on the other hand, data flow required for downloading the image temporarily can be saved.

In one implementation, examples of the static attribute information and manners to acquire the static attribute information are given below. The static acquiring unit 303 configured to acquire the static attribute information of the user of the terminal equipment is further configured to predict at least one of: interests, hobbies, and an occupation of the user of the terminal equipment, based on historical usage information of an application of the terminal equipment.

In the embodiments of the present disclosure, the static attribute information of the user of the terminal equipment is predicted based on historical information of the application. It can be understood that the static attribute information is not limited to the interests, the hobbies, and the occupation, it can also include other static attribute information of the user of the terminal equipment. Therefore, the above examples should not be understood as any limitation of the embodiments of the present disclosure.

In one implementation, the activity attribute information can be acquired as follows. The activity acquiring unit 301 configured to acquire the current activity attribute information of the user of the terminal equipment is further configured to predict the current activity attribute information of the user of the terminal equipment according to at least one of a current geographic location, a motion state, a current moment, and a running application set of the terminal equipment.

In the embodiments of the present disclosure, the current geographic location, the motion state, the current moment, the running application set, and other understandable information are used to predict the activity attribute information. However, the present disclosure is not limited thereto. Any information that can be used to predict the current activity of the user can be used. The above examples should not be understood as any limitation of the embodiments of the present disclosure.

In one implementation, examples of the activity attribute information are given below. The current activity attribute information of the user of the terminal equipment includes at least one of: work, travel, shopping, and rest.

Based on foregoing explanations, the activity attribute information can be various. The above examples should not be understood as any limitation of the embodiments of the present disclosure.

In one implementation, a manner in which the lock-screen image is determined is given below. The image determining unit 302 configured to determine the lock-screen image that matches the static attribute information and the current activity attribute information is further configured to search the library according to a category that the current activity attribute information is involved in and determine an image associated with both the static attribute information and the activity attribute information as the lock-screen image.

In the embodiments, the term "associated with" means that there is an association relationship. The association relationship relates to some logical connection. For example, some content satisfies the user's interests, some content relates to the occupation, or some content relates to the current activity of the user and the like. The association relationship can be defined in advance.

As an example, assuming that the user of the terminal equipment is a football fan, he/she is in tourism and the tourist city is Barcelona, and that day was Match 24, when Cruyff died, based on this, a picture of Cruyff can be displayed as the lock-screen interface, as illustrated in FIG. 2.

Referring to FIG. 4, a terminal equipment 400 is provided in the embodiments of the present disclosure. The terminal equipment includes a processing unit 401 and an input-output unit 402. The processing unit 401 is configured to control and manage operations of the terminal equipment. For example, the processing unit 401 is configured to be operable with the terminal equipment to perform operations at block 101-103 illustrated in FIG. 1 and/or other processes of technologies described herein. The input-output unit 402 is configured to support data input and output. The terminal equipment can also include a storing unit 403. The storing unit 403 is configured to store program codes and data of the terminal equipment.

The processing unit 401 can be a processor and a controller, for example, a central processing unit (CPU), a general-purpose processor, a digital signal processor (DSP), an application-specific integrated circuit (ASIC), a field programmable gate array (FPGA), or other programmable logic devices, transistor logic devices, hardware components, or any combination thereof. Various exemplary logical blocks, modules, and circuits described in conjunction with the disclosure may be achieved or implemented. The above-mentioned processor can also be a combination of computing functions, for example, a combination containing one or more microprocessors, a combination of a DSP and the micro-processor and the like. The input-output unit 402 can be a microphone, a handset, a speaker, a display and the like. The storing unit 403 can be a memory.

The input-output unit 402 is configured to receive data input and output data.

The processing unit 401 is configured to acquire current activity attribute information of a user of a terminal equipment; acquire static attribute information of the user of the terminal equipment; determine a lock-screen image that matches the static attribute information and the activity attribute information, based on the static attribute information and the activity attribute information.

In this embodiment of the present disclosure, the activity attribute information refers to attribute information of user's activity. The user can refer to human. The human's activity can include work, travel, shopping and the like. These human's activities can be predicted according to changes in some parameters, for example, a mobile phone application the user currently opens, the current moment, how long the user has not operated the terminal equipment, and various parameter changes. How to determine the attribute information of the user according to changes in parameter information that can be obtained by the terminal equipment is not limited in the embodiment of the present disclosure.

The static attribute information is a kind of information relative to the activity attribute information. This kind of information is relatively invariant or less variable. The static attribute information refers to some user attribute, such as interests, occupations, and hobbies of the user and the like. The information can be predicted by historical usage information of the user of the terminal equipment. For example, based on articles that the user of the terminal equipment shares via social software, the occupation of the user of the terminal equipment can be predicted. More specifically, for example, in case that the user of the terminal equipment usually shares various kinds of cases, it can be determined that the occupation of the user belongs to a legal profession. More specifically, in case that the shared cases are focused on patents, it can be determined that the occupation of the user is a patent-related occupation, such as an enterprise intellectual property position, a patent agent and the like.

In this embodiment, take both the static attribute information and the activity attribute information into consideration simultaneously, as a result, the lock-screen image determined finally will meet needs of both static attribute and activity attribute. For example, the lock-screen image not only matches an interest point of the user, but also matches a current activity scene. A more detailed example is given below. Assuming that the user is interested in football and a current activity is tourism, a lock-screen interface related to football culture of a current tourist location can be selected.

It can be understood that, after the lock-screen image is determined, the lock-screen image can be displayed on the display screen. Displaying of the lock-screen image on the display screen can be triggered by lighting of the display screen by the user, a call or a message, or other conditions that can light the screen. When to display the lock-screen image is not a concern of the embodiments of the present disclosure and will not be particularly limited.

The lock-screen image can be determined based on the static attribute information and the activity attribute information. On one hand, the lock-screen image matches the static attribute information, and it is possible ensure that the lock-screen image preferred by the user of the terminal equipment is recommended; on the other hand, the lock-screen image matches activity attribute information, and it is possible ensure that the lock-screen image of the current activity scene of the user of the terminal equipment is recommended. Therefore, a more targeted and more intelligent lock-screen picture recommendation can be achieved.

In one implementation, a solution to establish a library of the lock-screen image is also provided as follows. The processing unit 401 is further configured to establish a library containing the lock-screen image according to the static attribute information of the user of the terminal equipment before determining the lock-screen image that matches the static attribute information and the activity attribute information.

Other processes that the processing unit 401 is configured to perform can refer to the foregoing method embodiments and it will not be repeated in detail herein.

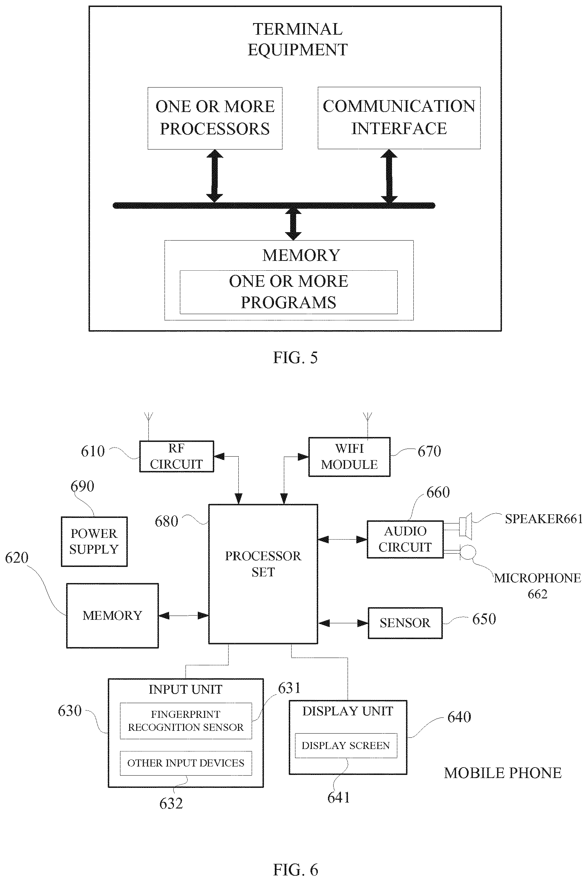

Referring to FIG. 5, FIG. 5 is a structure diagram of a terminal equipment of an embodiment of the present disclosure. As illustrated in FIG. 5, the terminal equipment includes one or more processors, a memory, a communication interface, and one or more programs. The one or more programs are stored in the memory and include instructions, which when executed, become operable with the one or more processors to execute following procedures.

Current activity attribute information of a user of a terminal equipment is acquired. Static attribute information of the user of the terminal equipment is acquired. A lock-screen image that matches the static attribute information and the activity attribute information is determined based on the static attribute information and the activity attribute information.

In one implementation, a solution to establish a library of the lock-screen image is also provided as follows. The above-mentioned method can further include the follows before the lock-screen image that matches the static attribute information and the activity attribute information is determined: a library containing the lock-screen image is established according to the static attribute information of the user of the terminal equipment.

In the embodiments of the present disclosure, the static attribute information is associated with static attribute of the user of the user equipment, therefore images that matches the static attribute information is relatively fixed, so that a corresponding library can be pre-established in the embodiments of the present disclosure. For example, in a scenario of WLAN, images that the library needs can be downloaded and then pre-stored in the terminal equipment. In addition, the library can be sorted according to categories that the activity attribute information may be involved in. Therefore, on one hand, speed of determining the lock-screen image subsequently can be accelerated; on the other hand, data flow required for downloading the image temporarily can be saved.

In one implementation, examples of the static attribute information and manners to acquire the static attribute information are given below. The processor configured to acquire the static attribute information of the user of the terminal equipment is further configured to predict at least one of interests, hobbies, and an occupation of the user of the terminal equipment based on historical usage information of an application of the terminal equipment.

In the embodiments of the present disclosure, the static attribute information of the user of the terminal equipment is predicted based on historical information of the application. It can be understood that the static attribute information is not limited to the interests, the hobbies, and the occupation, it can also include other static attribute information of the user of the terminal equipment. Therefore, the above examples should not be understood as any limitation of the embodiments of the present disclosure.

In one implementation, the activity attribute information can be acquired as follows. The processor configured to acquire the current activity attribute information of the user of the terminal equipment is further configured to predict the current activity attribute information of the user of the terminal equipment according to at least one of a current geographic location, a motion state, a current moment, and a running application set of the terminal equipment.

In the embodiments of the present disclosure, the current geographic location, the motion state, the current moment, the running application set, and other understandable information are used to predict the activity attribute information. However, the present disclosure is not limited thereto. Any information that can be used to predict the current activity of the user can be used. The above examples should not be understood as any limitation of the embodiments of the present disclosure.

In one implementation, examples of the activity attribute information are given below. The current activity attribute information of the user of the terminal equipment includes at least one of: work, travel, shopping, and rest.

Based on foregoing explanations, the activity attribute information can be various. The above examples should not be understood as any limitation of the embodiments of the present disclosure.

In one implementation, a manner in which the lock-screen image is determined is given below. The processor configured to determine the lock-screen image that matches the static attribute information and the activity attribute information include is configured to determine an image associated with both the static attribute information and the activity attribute information as the lock-screen image.

The foregoing technical solutions of the embodiments of the disclosure are mainly described from the viewpoint of execution of the method. It can be understood that, in order to implement the above functions, the mobile terminal includes hardware structures and/or software modules corresponding to the respective functions. Those skilled in the art should readily recognize that, in combination with the exemplary units and scheme steps or operations described in the embodiments disclosed herein, the present disclosure can be implemented in hardware or a combination of hardware and computer software. Whether a function is implemented by way of hardware or computer software driving hardware depends on the particular application and design constraints of the technical solution. Those skilled in the art may use different methods to implement the described functions for each particular application, but such implementation should not be considered as beyond the scope of the present disclosure.

According to the embodiments of the disclosure, functional units may be divided for the mobile terminal in accordance with the foregoing method examples. For example, functional units may be divided according to corresponding functions, and two or more functions may be integrated into one processing unit. The above-mentioned integrated unit can be implemented in the form of hardware or software functional units. It should be noted that the division of units in the embodiments of the present disclosure is schematic and is merely a logical function division; there may be other division manners in actual implementation.

An embodiment of the present disclosure further provides another terminal equipment. As illustrated in FIG. 6, t only parts related to the embodiments of the present disclosure are illustrated for ease of description. For technical details not described, reference may be made to the method embodiments of the present disclosure. The terminal equipment may be any terminal device, such as a mobile phone, a tablet computer, a personal digital assistant (PDA), a point of sale terminal (POS), an on-board computer and the like. The following describes the mobile phone as an example of the terminal equipment.

FIG. 6 is a block diagram of a part of a structure of a mobile phone related to a mobile terminal according to an embodiment of the present disclosure. As illustrated in FIG. 6, the mobile phone includes a RF (radio frequency) circuit 610, a memory 620, an input unit 630, a display unit 640, a sensor 650, an audio circuit 660, a Wi-Fi (wireless fidelity) module 670, a processor set 680, a power supply 690 and other components. Those skilled in the art can understand that the structure of the mobile phone illustrated in FIG. 6 does not constitute any limitation on a mobile phone. The mobile phone configured to implement technical solutions of the disclosure may include more or fewer components than illustrated or may combine certain components or different components.

In the following, various components of the mobile phone will be described in detail with reference to FIG. 6.

The RF circuit 610 may be configured to receive and transmit information. Generally, the RF circuit 610 includes, but is not limited to, an antenna, at least one amplifier, a transceiver, a coupler, a Low Noise Amplifier (LNA), a duplexer and on the like. In addition, the RF circuit 610 may further communicate with other devices via wireless communication and a network. The wireless communication may use any one communication standard or protocol, including, but not limited to, Global System of Mobile communication (GSM), General Packet Radio Service (GPRS), Code Division Multiple Access (CDMA), Wideband Code Division Multiple Access (WCDMA), Long Term Evolution (LTE), E-mail, Short Messaging Service (SMS) and so on.

The memory 620 may be configured to store software programs and modules, and the processor 680 executes various function applications and data processing of the mobile phone by running the software programs and the modules stored in the memory 620. The memory 620 may mainly include a program storage region and a data storage region, the storage program region may store an operation system, application programs needed for at least one function (a power manager service (PMS) wake-up function, a fingerprint data acquisition function, a feature point matching function, and a display lighting function) and so on; and the data storage region may store data (such as fingerprint data obtained by a fingerprint recognition sensor, pre-stored preset quick unlocking period, statistical information of screen-off unlocking period and so on) created according to use of the mobile phone. In addition, the memory 620 may include a high-speed RAM, and may further include a non-volatile memory such as one of at least a disk storage device, a flash device, or other non-volatile solid storage devices.

The input unit 630 may be configured to receive input digital or character information and generate key signal input associated with user setting and functional control of the mobile phone. As one implementation, the input unit 630 may includes a fingerprint recognition sensor 631 and other input devices 632. The fingerprint recognition sensor 631 may collect fingerprint data of a user thereon. The input unit 630 may further include other input devices 632. As one implementation, the other input devices 632 may include, but not limited to, one or more of a touch screen, a physical key, a function key (such as a volume control key, a switch key, etc.), a trackball, a mouse, a joystick and the like.

The display unit 640 may be configured to display information input by the user or information provided for the user or various menus of the mobile phone. The display unit 640 may include a display screen 641, and alternatively, the display screen 641 may be configured in the form of a Liquid Crystal Display (LCD), an Organic Light-Emitting Diode (OLED) and so on. Although the fingerprint sensor 631 and the display screen 641 are illustrated as two separate components in FIG. 6 to realize the input and output functions of the mobile phone, in some embodiments, the fingerprint sensor 631 may be integrated with the display screen 641 to implement the input and output functions of the mobile phone.

The mobile phone may further include at least one sensor 650, such as a light sensor, a motion sensor, and other sensors. Specifically, the light sensor may include an ambient light sensor and a proximity sensor; the ambient light sensor may adjust the luminance of the display screen 641 according to the brightness of ambient light, and the proximity sensor may turn off the display screen 641 and/or backlight when the mobile phone reaches nearby the ear. As a kind of motion sensor, an accelerometer sensor may detect the magnitude of an accelerated speed in each direction (generally, three-axis); when stationary, the accelerometer sensor can detect the magnitude and direction of a gravity; the accelerometer sensor may be configured to identify an application of a mobile phone gesture (e.g., horizontal and vertical screen switching, relevant games, and magnetometer gesture calibration), and vibration recognition related functions (e.g., pedometer and knocking) and the like. Other sensors such as a gyroscope sensor, a barometer sensor, a hygrometer sensor, a thermometer sensor, an infrared sensor, and other sensors configurable for the mobile phone will not be elaborated herein.

The audio circuit 660, a loudspeaker 661, and a microphone 662 may provide an audio interface between the user and the mobile phone. The audio circuit 660 may convert received audio data into electric signals and transmit the electric signals to the loudspeaker 661, and the loudspeaker 661 converts the electric signals into sound signals to output. Besides, the microphone 662 converts collected sound signals into electric signals, the audio circuit 660 receives and converts the electric signals into audio data; the audio data is output to the processor 680 for processing and the processed audio data is transmitted to another mobile phone via the RF circuit 610, or the audio data is output to the memory 620 for further processing.

Wi-Fi belongs to a short-range wireless transmission technology. With aid of the Wi-Fi module 670, the mobile phone may assist the user in E-mail receiving and sending, webpage browsing, access to streaming media and the like. Wi-Fi provides users with wireless broadband Internet access. Although the Wi-Fi module 670 is illustrated in FIG. 6, the Wi-Fi module 670 is not essential to the mobile phone and can be omitted according to actual needs without departing from the essential nature of the present disclosure.

The processor 680 is a control center of the mobile phone, and is configured to connect all parts of the whole mobile phone by utilizing various interfaces and lines, to run or execute the software program and/or the module stored in the memory 620 and call data stored in the memory 620 to execute various functions and processing data of the mobile phone, so as to wholly monitor the mobile phone. Alternatively, the processor 680 may include one or more processing units. The processor 680 may be integrated with an application processor and a modulation-demodulation processor, the application processor mainly processes an operation system, a user interface, an application program and the like, and the modulation-demodulation processor mainly processes wireless communication. It should be understood that the modulation-demodulation processor may not be integrated into the processor 680.

The mobile phone may further include a power supply 690 (such as a battery) for supplying power to each component. The power supply may be connected with the processor 680 logically via a power supply management system, so as to implement functions of charging, discharging, and power consumption management by means of the power supply management system.

The mobile phone may further include a camera, a Bluetooth module and the like, which are not illustrated, and will not be elaborated herein.

The method of the foregoing embodiments illustrated in FIG. 1 can be realized based on the structure of the mobile phone.

The functions of the units illustrated in FIG. 3-4 can be achieved based on the structure of the mobile phone.

The embodiments of the present disclosure also provide a non-transitory computer readable storage medium. The computer readable storage medium stores computer programs for electronic data interchange which, when executed, being operable with a computer to accomplish all or part of the operations of any of the methods described in the above-described method embodiment. The computer can be a terminal equipment or other equipment.

The embodiments of the present disclosure also provide a computer program product. The computer program product includes a non-transitory computer readable storage medium storing computer programs. The computer programs are operable with a computer to perform all or part of the operations of any of the methods described in the above method embodiments. The computer program product may be a software installation package. The computer can be a terminal equipment or other equipment.

It is to be noted that, for the sake of simplicity, the foregoing method embodiments are described as a series of action combinations, however, it will be appreciated by those skilled in the art that the present disclosure is not limited by the sequence of actions described. According to the present disclosure, certain steps or operations may be performed in other order or simultaneously. Besides, it will be appreciated by those skilled in the art that the embodiments described in the specification are exemplary embodiments and the actions and modules involved are not necessarily essential to the present disclosure.

In the foregoing embodiments, the description of each embodiment has its own emphasis. For the parts not described in detail in one embodiment, reference may be made to related descriptions in other embodiments.

In the embodiments of the disclosure, the apparatus disclosed in embodiments provided herein may be implemented in other manners. For example, the device/apparatus embodiments described above are merely illustrative; for instance, the division of the unit is only a logical function division and there can be other manners of division during actual implementations, for example, multiple units or components may be combined or may be integrated into another system, or some features may be ignored, omitted, or not performed. In addition, coupling or communication connection between each illustrated or discussed component may be direct coupling or communication connection, or may be indirect coupling or communication among devices or units via some interfaces, and may be electrical connection, mechanical connection, or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the embodiments.

In addition, the functional units in various embodiments of the present disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the present disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to perform all or part of the steps described in the various embodiments of the present disclosure. The memory includes various medium capable of storing program codes, such as a USB (universal serial bus) flash disk, a read-only memory (ROM), a random-access memory (RAM), a removable hard disk, Disk, compact disc (CD), or the like.

It will be understood by those of ordinary skill in the art that all or a part of the various methods of the embodiments described above may be accomplished by means of a program to instruct associated hardware, the program may be stored in a computer-readable memory, which may include a flash memory, a read-only memory (ROM), a random-access memory (RAM), Disk or compact disc (CD), and so on.

## Claims

1. A method for controlling a lock-screen interface, the method comprising:
predicting (101) current activity attribute information of the user of the terminal equipment according to a running application set of the terminal equipment and at least one of a current geographic location, a motion state, and a current moment, the activity attribute information referring to attribute information of user's activity;
predicting static attribute information of the user of the terminal equipment based on historical usage information of an application of the terminal equipment, the static attribute information referring to a user attribute comprising at least one of: interests, occupations, and hobbies of the user;
storing the static attribute information of the user of the terminal equipment; and
determining (102) a lock-screen image that matches the current activity attribute information and the pre-stored static attribute information.

2. The method of claim 1, wherein the method further comprises the following before the determining a lock-screen image that matches the activity attribute information and pre-stored static attribute information:
establishing a library containing the lock-screen image according to the static attribute information of the user of the terminal equipment; and
sorting the library according to categories that activity attribute information is involved in.

3. The method of claim 2, wherein the determining a lock-screen image that matches the current activity attribute information and pre-stored static attribute information comprises:
searching the library according to a category that the current activity attribute information is involved in; and
determining an image associated with both the static attribute information and the current activity attribute information as the lock-screen image.

4. A terminal equipment **characterised by** comprising:
one or more processors (680); and
one or more non-transitory memories (620) storing instructions that, when executed by the one or more processors (680), are adapted to cause the terminal equipment to perform a method according to any one of claims 1 to 3.

5. A non-transitory computer readable storage medium (620), configured to store instructions that, when executed by a processor included in a computer, are adapted to cause the computer to perform a method according to any one of claims 1 to 3.

## Patentansprüche

1. Verfahren zum Steuern einer Sperrbildschirmschnittstelle, wobei das Verfahren Folgendes umfasst:
das Vorhersagen (101) aktueller Aktivitätsattributinformationen des Benutzers des Endgeräts gemäß einem laufenden Anwendungssatz des Endgeräts und zumindest einem aus aktuellem geografischem Standort, Bewegungsstatus und aktuellem Zeitpunkt, wobei die Aktivitätsattributinformationen sich auf Attributinformationen der Aktivität des Benutzers beziehen;
das Vorhersagen statischer Attributinformationen des Benutzers des Endgeräts auf Grundlage historischer Nutzungsinformationen einer Anwendung des Endgeräts, wobei sich die statischen Attributinformationen auf ein Benutzerattribut beziehen, das zumindest eines aus Interessen, Berufstätigkeiten und Hobbys des Benutzers umfasst;
das Speichern der statischen Attributinformationen des Benutzers des Endgeräts und
das Bestimmen (102) eines Sperrbildschirmbilds, das zu den aktuellen Aktivitätsattributinformationen und den vorab gespeicherten statischen Attributinformationen passt.

2. Verfahren nach Anspruch 1, wobei das Verfahren ferner Folgendes umfasst, bevor ein Sperrbildschirmbild bestimmt wird, das zu den aktuellen Aktivitätsattributinformationen und den vorab gespeicherten statischen Attributinformationen passt:
das Erstellen einer Bibliothek, die das Sperrbildschirmbild gemäß den statischen Attributinformationen des Benutzers des Endgeräts enthält; und
das Sortieren der Bibliothek nach Kategorien, in denen die Aktivitätsattributinformationen umfasst sind.

3. Verfahren nach Anspruch 2, wobei das Bestimmen eines Sperrbildschirmbilds, das zu den aktuellen Aktivitätsattributinformationen und den vorab gespeicherten statischen Attributinformationen passt, Folgendes umfasst:
das Durchsuchen der Bibliothek nach einer Kategorie, in denen die aktuellen Aktivitätsattributinformationen umfasst sind; und
das Bestimmen eines Bilds, das sowohl den statischen Attributinformationen als auch den aktuellen Aktivitätsattributinformationen zugeordnet ist, als das Sperrbildschirmbild.

4. Endgerät, das **dadurch gekennzeichnet ist, dass** es Folgendes umfasst:
einen oder mehrere Prozessoren (680) und
einen oder mehrere nichtflüchtige Speicher (620), der Befehle speichert, die bei Ausführung durch den einen oder die mehreren Prozessoren (680) geeignet sind, um zu bewirken, dass das Endgerät ein Verfahren nach einem der Ansprüche 1 bis 3 ausführt.

5. Nichtflüchtiges computerlesbares Speichermedium (620), das konfiguriert ist, um Befehle zu speichern, die bei Ausführung durch einen Prozessor, der Teil eines Computers ist, geeignet sind, um zu bewirken, dass der Computer ein Verfahren nach einem der Ansprüche 1 bis 3 ausführt.

## Revendications

1. Procédé de commande d'une interface d'écran de verrouillage, le procédé comprenant les étapes consistant à :
prédire (101) des informations d'attribut d'activité courante de l'utilisateur de l'équipement terminal selon un ensemble d'applications en cours d'exécution de l'équipement terminal et au moins l'un parmi un emplacement géographique courant, un état de mouvement, et un moment courant, les informations d'attribut d'activité faisant référence à des informations d'attribut d'une activité de l'utilisateur ;
prédire des informations d'attribut statique de l'utilisateur de l'équipement terminal sur la base d'informations historiques d'utilisation d'une application de l'équipement terminal, les informations d'attribut statique faisant référence à un attribut d'utilisateur comprenant au moins l'un parmi : des intérêts, des occupations, et des loisirs de l'utilisateur ;
stocker les informations d'attribut statique de l'utilisateur de l'équipement terminal ; et
déterminer (102) une image d'écran de verrouillage qui correspond aux informations d'attribut d'activité courante et aux informations d'attribut statique pré-stockées.

2. Procédé selon la revendication 1, dans lequel le procédé comprend en outre ce qui suit avant de déterminer une image d'écran de verrouillage qui correspond aux informations d'attribut d'activité et aux informations d'attribut statique pré-stockées :
établir une bibliothèque contenant l'image d'écran verrouillé selon les informations d'attribut statique de l'utilisateur de l'équipement terminal ; et
trier la bibliothèque selon des catégories dans lesquelles les informations d'attribut d'activité sont impliquées.

3. Procédé selon la revendication 2, dans lequel la détermination d'une image d'écran de verrouillage qui correspond aux informations d'attribut d'activité courante et aux informations d'attribut statique pré-stockées comprend :
la recherche dans la bibliothèque selon une catégorie dans laquelle les informations d'attribut d'activité courante sont impliquées ; et
la détermination d'une image associée à la fois aux informations d'attribut statique et aux informations d'attribut d'activité courante en tant qu'image d'écran de verrouillage.

4. Équipement terminal **caractérisé en ce qu'**il comprend :
un ou plusieurs processeurs (680) ; et
une ou plusieurs mémoires non-transitoires (620) stockant des instructions qui, lorsqu'elles sont exécutées par les un ou plusieurs processeurs (680), sont adaptées pour amener l'équipement terminal à effectuer un procédé selon l'une quelconque des revendications 1 à 3.

5. Support de stockage lisible par ordinateur non-transitoire (620), configuré pour stocker des instructions qui, lorsqu'elles sont exécutées par un processeur inclus dans un ordinateur, sont adaptées pour amener l'ordinateur à effectuer un procédé selon l'une quelconque des revendications 1 à 3.
